# EUROPEAN PATENT APPLICATION

(11) **EP 4 721 696 A1**
(43) Date of publication of application: **08.04.2026**
(21) Application number: 24811359.9
(22) Date of filing: 20.05.2024
(51) Int. Cl.: A61C 8/00, A61C 5/70

(54) **ABUTMENT ASSEMBLY**

(30) Priority: 25.05.2023 KR 20230067847
(71) Applicant: Osstemimplant Co., Ltd., Gangseo-gu Seoul 07789 (KR)
(72) Inventor: KIM, Seong Ro, Seoul 07789 (KR); LEE, Young Seok, Seoul 07789 (KR); HEO, Jae Chan, Seoul 07789 (KR)
(74) Representative: Germain Maureau
(86) International application number: PCT/KR2024/006788
(87) International publication number: WO 2024/242420

(57) **Abstract**

An embodiment of the present invention provides an abutment assembly comprising: a lower connection part which has a first through-hole formed at the center thereof to vertically extend, a first anti-rotation portion formed at the top thereof to be coupled to a crown so as to prevent rotation relative to the crown, and a second anti-rotation portion formed at the bottom thereof to be coupled to an abutment so as to prevent rotation relative to the abutment; and an upper connection part which has a third through-hole formed at the center thereof to vertically extend, and is inserted into a through hole of the crown and coupled to the lower connection part.

## Description

### [Technical Field]

The present invention relates to an abutment assembly.

### [Background Art]

In general, an abutment assembly is an artificial substitute to reproduce the same shape and function as a natural tooth and includes an implant on which a screw thread is formed on an outer circumferential surface and which imitates a tooth root shape of the natural tooth to be installed in an alveolar bone, an abutment connected to and installed on the implant and having an upper portion to which an artificial tooth is coupled, and a fixing screw fixing the implant and the abutment to each other.

Methods of coupling a prosthesis which is an artificial tooth to an abutment mainly include a screw fastening method, a cement bonding method, and a coupling method in which the screw fastening method and the cement bonding method are mixed and used.

First, a screw fastening method is a method of fastening a prosthesis integrally formed with an abutment to an implant implemented in an alveolar bone, but there is a disadvantage that there is a possibility of deformation due to contraction occurring when the prosthesis is casted.

In addition, a cement bonding method is a method of fastening an abutment to an implant and then bonding a prosthesis to an upper surface of the abutment using dental cement. However, in the cement bonding method, it takes much time to remove the cement exposed at the outside of a crown, and even when the cement is cleanly removed, there are problems that the cement inside the crown may melt and leak into a patient's mouth to cause gingivitis, and in addition, the implant may be separated. In addition, even in a mixed fastening method in which the screw fastening method and the cement fastening method are used, there are problems of loosening a screw and causing gingivitis due to remaining cement.

### [Description of Invention]

### [Technical Problem]

The present invention is to solve the above-described problems of the conventional technology and is directed to providing an abutment assembly with a structure capable of preventing loosening of a crown after the crown is fastened to an abutment even without using dental cement.

### [Technical Solution]

One aspect of the present invention provides an abutment assembly including a lower connection part having a central portion in which a first through hole extending in a vertical direction is formed, an upper portion in which a first rotation prevention portion coupled to a crown to prevent relative rotation is formed, and a lower portion in which a second rotation prevention portion coupled to an abutment to prevent relative rotation is formed and an upper connection part having a central portion in which a third through hole extending in the vertical direction is formed and inserted into a through hole of the crown to be coupled to the lower connection part.

In one embodiment, the abutment assembly may further include the crown in which a second through hole extending in the vertical direction is formed in a central portion of the crown and a lower groove into which the first rotation prevention portion of the lower connection part is inserted and coupled thereto is formed under the second through hole.

In one embodiment, the lower groove of the crown may include a circular coupling surface to which the first rotation prevention portion is coupled, one or more flat surface portions formed perpendicular to a radial direction of the lower groove may be formed on the coupling surface, and the first rotation prevention portion may include one or more rotation prevention surfaces formed to be cut to correspond to the flat surface portions.

In one embodiment, the lower groove of the crown may include a circular coupling surface to which the first rotation prevention portion is coupled, a recessed portion may be formed in the coupling surface, and the first rotation prevention portion may include a protruding portion corresponding to the recessed portion.

In one embodiment, a stepped portion may be provided in the second through hole of the crown, and the upper connection part may include a support portion caught on and supported by the stepped portion of the crown and a lower coupling portion extending from a lower portion of the support portion and coupled to the first through hole of the lower connection part.

In one embodiment, the lower coupling portion may include coupling pieces divided by cut grooves and elastically deformed in a radial direction, a catching protrusion may be formed on an outer surface of each of the coupling pieces, an inner vertical portion having a constant inner diameter and a boring portion which is provided under the inner vertical portion and to which the catching protrusion is coupled may be formed in the first through hole of the lower connection part, and the coupling pieces may be contracted inward in the radial direction while passing through the inner vertical portion and expand in the boring portion in the radial direction to be elastically coupled to an inner circumferential surface of the first through hole.

In one embodiment, a cross section of the lower coupling portion may be formed in a circular shape, and the lower coupling portion may be press-fitted into the first through hole of the lower connection part such that an outer circumferential surface of the lower coupling portion is in close contact with an inner circumferential surface of the first through hole.

In one embodiment, the abutment assembly may further include the abutment in which a second inner circumferential screw portion is provide in a central portion of the abutment and a second inner groove to which the second rotation prevention portion is coupled is formed.

In one embodiment, a cross section of the second rotation prevention portion may be formed in a polygonal shape, and the second inner groove may include a polygonal portion corresponding to the second rotation prevention portion.

In one embodiment, the abutment assembly may further include a screw supported by an upper surface of the upper connection part and having a lower portion in which an outer circumferential screw portion fastened to the second inner circumferential screw portion of the abutment is formed.

In one embodiment, a third inner circumferential screw portion to which the outer circumferential screw portion of the screw is fastened may be provided in the first through hole of the lower connection part.

Another aspect of the present invention provides an abutment assembly including an implant implanted in an alveolar bone and including a first inner groove in which a first inner circumferential screw portion is formed, an abutment which has a central portion in which a second inner groove including a second inner circumferential screw portion is formed and is inserted into the first inner groove and fastened to the first inner circumferential screw portion, a crown having a central portion in which a second through hole extending in a vertical direction is formed and including a lower groove under the second through hole, a lower connection part having a central portion in which a first through hole extending in the vertical direction is formed, an upper portion in which a first rotation prevention portion coupled to the lower groove of the crown is formed to prevent relative rotation, and a lower portion in which a second rotation prevention portion coupled to the second inner groove of the abutment is formed to prevent relative rotation, and an upper connection part having a central portion in which a third through hole extending in the vertical direction is formed and inserted into the second through hole of the crown to be coupled to the lower connection part.

### [Advantageous Effects]

According to one aspect of the present invention, a crown can be firmly coupled to an abutment due to a coupling structure between an implant, the abutment, a lower connection part, the crown, an upper connection part, and a screw even without dental cement, and thus there is an advantage of preventing gingivitis due to the dental cement.

Effects of the present disclosure are not limited to the above-described effects and should be understood to include all effects which may be inferred from the detailed description of the present disclosure or configuration of the present disclosure described in the claims.

### [Description of Drawings]

FIG. 1 is a perspective view illustrating an abutment assembly according to one embodiment of the present invention.
FIG. 2 is an exploded view illustrating the abutment assembly according to one embodiment of the present invention.
FIG. 3 is a cross-sectional view illustrating the abutment assembly according to one embodiment of the present invention.
FIGS. 4A and 4B are a perspective view and a cross-sectional view, respectively, illustrating an implant according to one embodiment of the present invention.
FIGS. 5A and 5B are a perspective view and a cross-sectional view, respectively, illustrating an abutment according to one embodiment of the present invention.
FIGS. 6A to 6C are a perspective view, a plan view, and a cross-sectional view, respectively, illustrating a lower connection part according to one embodiment of the present invention.
FIGS. 7A to FIG. 7C are a perspective view, a plan view, and a cross-sectional view, respectively, illustrating a crown according to one embodiment of the present invention.
FIGS. 8A to 8C are a perspective view, a plan view, and a cross-sectional view, respectively, illustrating an upper connection part according to one embodiment of the present invention.
FIGS. 9A and 9B are a perspective view and a cross-sectional view, respectively, illustrating an upper connection part according to another embodiment of the present invention.
FIGS. 10A and 10B are a perspective view and a cross-sectional view, respectively, illustrating a screw according to one embodiment of the present invention.
FIGS. 11 and 12 are views illustrating a process of assembling the abutment assembly according to one embodiment of the present invention.

### [Modes of the Invention]

Hereinafter, an abutment assembly of the present invention will be described in detail.

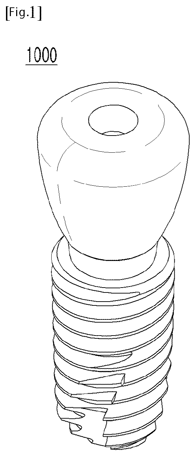

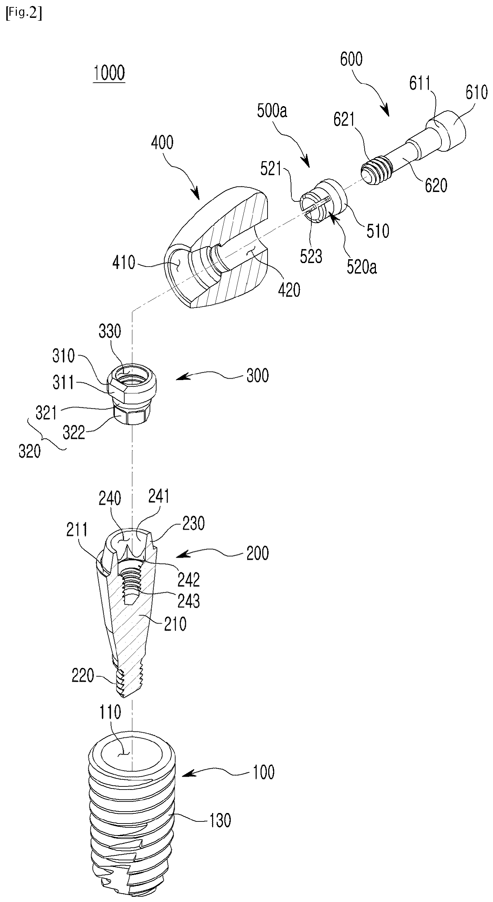

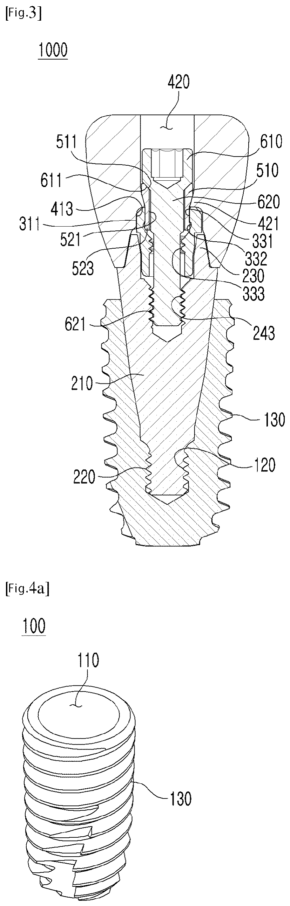

FIG. 1 is a perspective view illustrating an abutment assembly according to one embodiment of the present invention. FIG. 2 is an exploded view illustrating the abutment assembly according to one embodiment of the present invention. FIG. 3 is a cross-sectional view illustrating the abutment assembly according to one embodiment of the present invention.

Referring to FIGS. 1 to 3, an abutment assembly 1000 according to one embodiment of the present invention includes an implant 100, an abutment 200, a lower connection part 300, a crown 400, an upper connection part 500a, and a screw 600.

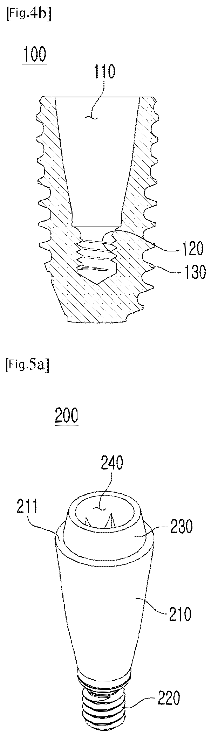

FIGS. 4A and 4B are a perspective view and a cross-sectional view, respectively, illustrating the implant according to one embodiment of the present invention.

Referring to FIGS. 2, 3, 4A, and 4B, the implant 100 is formed to have a tooth root shape of a natural tooth serving as a root. In addition, a first inner groove 110 is formed in a central portion of the implant 100, a first inner circumferential screw portion 120 is installed in a lower portion of the first inner groove 110, and a second outer circumferential screw portion 220 of the abutment 200 is coupled to the first inner circumferential screw portion 120. A first outer circumferential screw portion 130 is formed on an outer circumferential surface of the implant 100, and the implant 100 is inserted into and coupled to an alveolar bone.

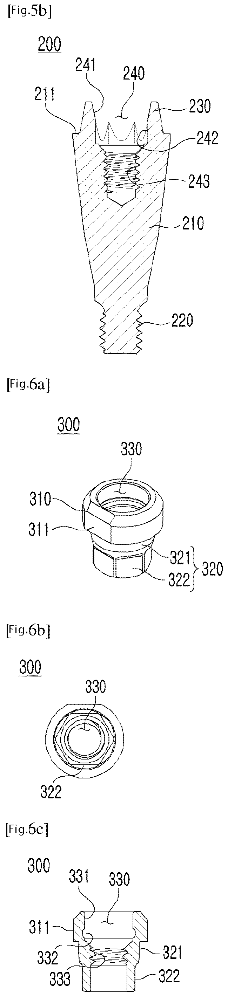

FIGS. 5A and 5B are a perspective view and a cross-sectional view, respectively, illustrating the abutment according to one embodiment of the present invention.

Referring to FIGS. 2, 3, 5A, and 5B, the abutment 200 is coupled to the implant 100 and supports the lower connection part 300 and the crown 400, and a second inner groove 240 is formed in an upper surface of the abutment 200 such that the lower connection part 300 is coupled to the second inner groove 240.

In addition, the abutment 200 includes a lower side portion 210, the second outer circumferential screw portion 220, and an upper side portion 230.

The lower side portion 210 may be inserted into the first inner groove 110 of the implant 100, and an outer circumferential surface of the lower side portion 210 may be formed in a tapered shape of which a diameter gradually decreases downward. In addition, a lower surface of the crown 400 may be supported by an upper surface 211 of the lower side portion 210.

The second outer circumferential screw portion 220 is formed to extend in the lower side portion 210, and a screw thread fastened to the first inner circumferential screw portion 120 of the implant 100 is formed on an outer circumferential surface of the second outer circumferential screw portion 220.

The upper side portion 230 protrudes from an upper portion of the lower side portion 210 toward the outside of the implant 100. A cross section of the upper side portion 230 may have a circular shape, and the upper side portion 230 may be formed in a pyramid shape of which an outer diameter decreases upward.

The second inner groove 240 of the abutment 200 may include an inner inclined portion 241, a polygonal portion 242, and a second inner circumferential screw portion 243.

More specifically, in the second inner groove 240 of the abutment 200, the inner inclined portion 241 formed to extend downward to a predetermined depth from an entrance of an upper surface of the second inner groove 240 and having a circular cross section and an inner diameter decreasing downward, the polygonal portion 242 formed to a predetermined depth under the inner inclined portion 241, having a polygonal cross section, and coupled to the lower connection part 300, and the second inner circumferential screw portion 243 formed under the polygonal portion 242 are installed, and the screw 600 is fastened to the second inner circumferential screw portion 243.

FIGS. 6A to 6C are a perspective view, a plan view, and a cross-sectional view, respectively, illustrating the lower connection part according to one embodiment of the present invention.

Referring to FIGS. 2, 3, and 6A to 6C, the lower connection part 300 may be coupled to the upper connection part 500a to connect the abutment 200 and the crown 400 and formed of a metal material such as titanium but is not limited thereto.

The lower connection part 300 and the upper connection part 500a which are coupled to the crown 400 are fastened to the abutment 200. The lower connection part 300 includes a first rotation prevention portion 310 coupled to the crown 400 to prevent relative rotation and a second rotation prevention portion 320 coupled to the abutment 200 to prevent relative rotation, and a first through hole 330 extending in a vertical direction is formed in a central portion of the lower connection part 300.

The first rotation prevention portion 310 is formed in an upper portion of the lower connection part 300 and coupled to a lower groove 410, preferably to a coupling surface 412, of the crown 400. One or more first rotation prevention surfaces 311 may be formed on the first rotation prevention portion 310. The first rotation prevention surface 311 may be formed in a shape in which one side of an outer circumferential surface of the first rotation prevention portion 310 is vertically cut. The first rotation prevention surface 311 may be aligned with a flat surface portion 413 formed on the coupling surface 412 of the crown 400. That is, when the first rotation prevention surface 311 is aligned with and coupled to the flat surface portion 413, rotation of the crown 400 with respect to the lower connection part 300 can be prevented.

In an exemplary embodiment, the lower connection part 300 and the crown 400 may be engaged with each other in a concave-convex manner. For example, a protruding portion (not shown) protruding outward in a radial direction may be formed on an outer surface of the first rotation prevention portion 310, and a recessed portion (not shown) corresponding to the protruding portion may be formed in the coupling surface 412.

Meanwhile, the second rotation prevention portion 320 is formed in a lower portion of the lower connection part 300, is inserted into and supported by the second inner groove 240 of the abutment 200, and includes a lower extension portion 321 and a second rotation prevention surface 322.

The lower extension portion 321 may extend downward from a lower surface of the first rotation prevention portion 310, and a cross section of the lower extension portion 321 may be formed in a circular shape. In an exemplary embodiment, a portion of an outer surface of the lower extension portion 321 may be formed in a tapered shape at an angle corresponding to the inner inclined portion 241.

A lower portion of the lower extension portion 321 may be formed in a polygonal shape corresponding to the polygonal portion 242 of the abutment 200. Specifically, a plurality of second rotation prevention surfaces 322 each formed in a shape in which one side of an outer circumferential surface of the lower extension portion 321 is vertically cut may be formed under the lower extension portion 321.

That is, when the second rotation prevention surface 322 is aligned with and coupled to the polygonal portion 242 of the abutment 200, rotation of the lower connection part 300 with respect to the abutment 200 can be prevented.

In an exemplary embodiment, one surface of the second rotation prevention surfaces 322 may be formed in the same direction as the first rotation prevention surface 311 of the first rotation prevention portion 310. When the first rotation prevention portion 310 of the lower connection part 300 enters the lower groove 410 of the crown 400, since alignment between the first rotation prevention surface 311 of the lower connection part 300 and the flat surface portion 413 of the crown 400 is not visually checked, the alignment may be changed when entering. In this case, when one surface of the second rotation prevention surfaces 322 are formed in the same direction as the first rotation prevention surface 311, the alignment between the first rotation prevention surface 311 and the flat surface portion 413 of the crown 400 may be visually checked through one surface of the rotation prevention surfaces 322.

The first through hole 330 may include an inner vertical portion 331 formed to extend downward to a predetermined depth from an entrance of an upper surface of the first through hole 330 and having a circular cross section and a constant inner diameter and a boring portion 332 formed under the inner vertical portion 331 and having an inner diameter greater than the inner diameter of the inner vertical portion 331.

In addition, a third inner circumferential screw portion 333 may be formed in the first through hole 330. The screw 600 may be temporarily fastened to the third inner circumferential screw portion 333 while passing through the first through hole 330.

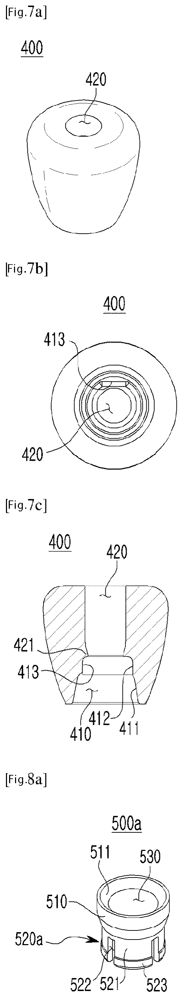

FIGS. 7A to FIG. 7C are a perspective view, a plan view, and a cross-sectional view, respectively, illustrating the crown according to one embodiment of the present invention.

Referring to FIGS. 2, 3, and 7A to 7C, the crown 400 may form an exterior of an artificial tooth and may be customized through a computer added design (CAD) or computer added manufacturing (CAM) system based on a library registered on a dental factory. The crown 400 may be formed of a zirconia material but is not limited thereto.

The lower groove 410 may be formed in a lower portion of the crown 400, and a second through hole 420 which communicates with the lower groove 410 and vertically extends is formed in a central portion of the crown 400.

Specifically, the lower groove 410 may include an inclined support surface 411, the coupling surface 412, and the flat surface portion 413. A cross section of the inclined support surface 411 has a circular shape, and the inclined support surface 411 may be formed in a tapered shape of which an inner diameter increases upward from a lower end of the lower groove 410.

The coupling surface 412 may be formed in a cylindrical shape recessed to a predetermined depth from an upper end of the inclined support surface 411. The coupling surface 412 faces the outer surface of the first rotation prevention portion of the lower connection part.

In addition, one or more flat surface portions 413 formed perpendicular to a radial direction of the lower groove 410 may be formed on the coupling surface 412. The flat surface portion 413 may be aligned with the first rotation prevention surface 311 of the lower connection part 300, thereby preventing relative rotation of the crown 400 with respect to the lower connection part 300.

In addition, a stepped portion 421 protruding in the radial direction may be provided in the second through hole 420. A support portion 510 of the upper connection part 500a may be caught on and supported by the stepped portion 421. An upper surface of the stepped portion 421 may be formed as an inclined surface inclined downward.

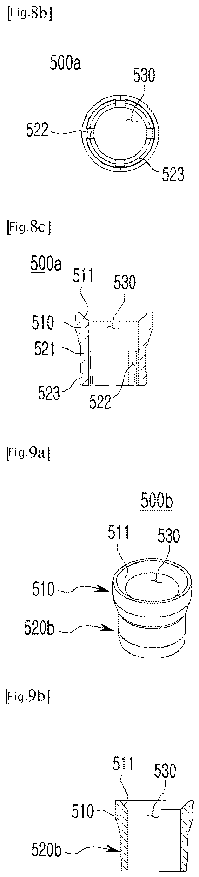

FIGS. 8A to 8C are a perspective view, a plan view, and a cross-sectional view, respectively, illustrating the upper connection part according to one embodiment of the present invention.

Referring to FIGS. 2, 3, and 8A to 8C, a third through hole 530 extending in the vertical direction is formed in a central portion of the upper connection part 500a, and the upper connection part 500a includes the support portion 510 and a lower coupling portion 520a. The upper connection part 500a may be formed of a metal material such as titanium but is not limited thereto.

The support portion 510 is formed in a cylindrical shape to have an outer diameter greater than an inner diameter of the stepped portion 421. A portion of an outer surface of the support portion 510 may be formed in a tapered shape corresponding to the inclined surface of the stepped portion 421.

A seating portion 511 of which an inner diameter decreases downward may be provided on an upper surface of the support portion 510. A head portion 610 of the screw 600, more specifically, a tapered portion 611 formed on a lower end of the head portion 610 may be seated on and supported by the seating portion 511.

The lower coupling portion 520a may include at least two coupling pieces 521 divided by cut grooves 522 vertically formed in the support portion 510 to a lower end of the lower coupling portion 520a and may be elastically deformed in the radial direction.

The adjacent cut grooves 522 may be formed to be spaced apart from each other at the same angles in a circumferential direction of the lower coupling portion 520a. For example, the lower cut grooves 522 may be formed to be spaced apart from each other at 90° around the third through hole 530, and thus the lower coupling portion 520a may include a total of four coupling pieces 521. However, the number of the lower cut grooves 522 is not limited thereto and may vary as necessary.

The lower coupling portion 520a may be fastened to the first through hole 330 of the lower connection part 300 in a snap coupling manner. Specifically, each of the coupling pieces 521 has a diameter corresponding to the inner vertical portion 331 of the first through hole 330. A catching protrusion 523 protruding outward in the radial direction may be formed on an end portion of the coupling piece 521. The catching protrusion 523 may guide snap coupling thereof to the boring portion 332 of the lower connection part 300.

That is, when the coupling piece 521 is inserted into the first through hole 330, the catching protrusion 523 may be elastically contracted and deformed while in contact with an inner surface of the inner vertical portion 331. Then, when the coupling piece 521 is completely inserted into the first through hole 330, as the catching protrusion 523 passes through the inner vertical portion 331 and is seated on the boring portion 332, the catching protrusion 523 may be elastically restored.

In an exemplary embodiment, the coupling piece 521 of the lower coupling portion 520a may expand outward due to a body portion 620 of the screw 600 and may come into contact with the inner vertical portion 331 when the screw 600 is inserted into the second through hole 530. Accordingly, the lower connection part 300 and the upper connection part 500a may be more firmly coupled.

As the upper connection part 500a is snap-coupled to the lower connection part 300 as described above, a fastening sensation can be provided to a user, and thus, the crown 400 may be separably fastened to the abutment 200. That is, the crown 400 and the abutment 200 may be fastened to prevent the crown 400 from being out of position due to gum repulsion even without using cement.

In addition, the lower connection part 300 and the upper connection part 500a reduce impacts applied to the alveolar bone when chewing is repeatedly performed and serve as a periodontal ligament at the same time by reproducing fluidity almost similar to the movement of the natural tooth through the elastic deformation when an external force is applied thereto to absorb and disperse the external force.

FIGS. 9A and 9B are a perspective view and a cross-sectional view, respectively, illustrating an upper connection part according to another embodiment of the present invention.

Although the upper connection part 500a is elastically coupled to the lower connection part 300, the present invention is not limited thereto. For example, referring to FIGS. 6, 9A, and 9B, an upper connection part 500b may include a lower coupling portion 520b formed in a cylindrical shape and having a diameter corresponding to an inner vertical portion 331 of a lower connection part 300. In this case, the lower coupling portion 520b of the upper connection part 500b may be coupled to the lower connection part 300 in a forcible press fitting manner, and when the press fitting is completed, an outer surface of the lower coupling portion 520b and an inner surface of the inner vertical portion 331 of the lower connection part 300 may be in close contact with each other to maintain a firmly coupled state.

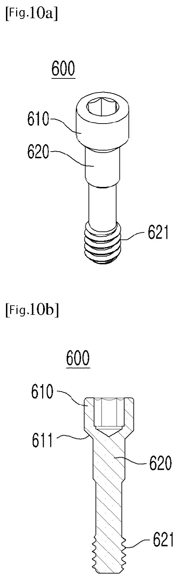

FIGS. 10A and 10B are a perspective view and a cross-sectional view, respectively, illustrating the screw according to one embodiment of the present invention.

Referring to FIGS. 2, 3, 10A, and 10B, the screw 600 may pass through the second through hole 420 of the crown 400, may be coupled to the second inner circumferential screw portion 243 of the abutment 200, and may be formed of a metal material such as titanium but is not limited thereto. The screw 600 includes the head portion 610 and the body portion 620.

A driver groove may be formed in an upper surface of the head portion 610 such that a dental driver is fitted into the driver groove and rotates the head portion 610. The driver groove includes six grooves formed to be recessed in an inner wall of the head portion 610 at a predetermined distance in a circumferential distance such that the hexagonal dental driver is fitted thereinto. However, the present invention is not limited thereto, and the number of the grooves of the driver groove may vary to correspond to the dental driver formed in a triangular, quadrangular, or pentagonal shape.

The tapered portion 611 may be formed on the lower end of the head portion 610. The tapered portion 611 may be a portion which connects the head portion 610 and the body portion 620 and may be formed such that a diameter gradually decreases toward a lower end portion. When the screw 600 passes through the second through hole 420 of the crown 400 and is fastened to the second inner circumferential screw portion 243 of the abutment 200, the tapered portion 611 is supported by the seating portion 511 of the upper connection part 500a.

In this case, since the screw 600 formed of the metal material is supported by the seating portion 511 of the upper connection part 500a formed of the metal material, a mutual frictional force can be increased to prevent loosening of the screw 600.

The body portion 620 has a cylindrical shape extending from the tapered portion 611 in a longitudinal direction, and a third outer circumferential screw portion 621 which is partially fastened to the second inner circumferential screw portion 243 of the abutment 200 is formed on an outer circumferential surface of the body portion 620.

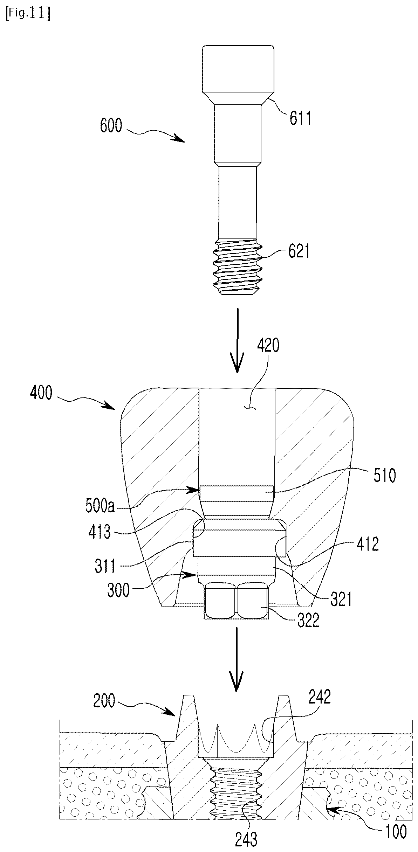

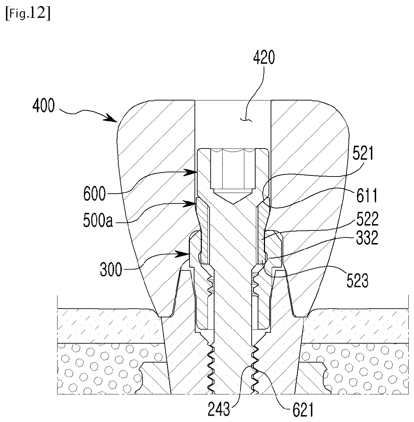

FIGS. 11 and 12 are views illustrating a process of assembling the abutment assembly according to one embodiment of the present invention.

Hereinafter, a process of assembling the abutment assembly 1000 of the present invention will be described in detail with reference to FIGS. 11 and 12.

First, the abutment 200 is fixedly inserted into the implant 100 implanted in the alveolar bone.

In addition, the rotation prevention surface 311 formed on the first rotation prevention portion 310 of the lower connection part 300 is aligned with and inserted into the flat surface portion 413 formed on the coupling surface 412 of the crown 400, and the upper connection part 500a enters the lower connection part 300 through the second through hole 420 of the crown 400. Accordingly, the lower connection part 300, the crown 400, and the upper connection part 500a are completely fastened.

Next, when the second rotation prevention surface 322 of the second rotation prevention portion 320 is aligned with the polygonal portion 242 of the abutment 200, and the lower connection part 300 is inserted into the abutment 200, the crown 400 and the abutment 200 are temporarily completely fastened.

Then, when the third outer circumferential screw portion 621 of the screw 600 passes through the second through hole 420 of the crown 400 and is fastened to the second inner circumferential screw portion 243 of the abutment 200, the tapered portion 611 of the screw 600 is supported by the seating portion 511 of the upper connection part 500a, and thus, the lower connection part 300, the upper connection part 500a, and the crown 400 are more firmly coupled.

As described above, according to the abutment assembly 1000 of the present invention, the crown 400 may be firmly coupled to the abutment 200 due to a coupling structure between the implant 100, the abutment 200, the lower connection part 300, the crown 400, the upper connection part 500a, and the screw 600 even without the dental cement, and thus occurrence of gingivitis due to the dental cement can be prevented.

The above description is only exemplary, and it will be understood by those skilled in the art that the invention may be performed in other concrete forms without changing the technological scope and essential features. Therefore, the above-described embodiments should be considered as only examples in all aspects and not for purposes of limitation. For example, each component described as a single type may be implemented in a distributed manner, and similarly, components that are described as being distributed may be implemented in a coupled manner.

The scope of the present invention is defined by the appended claims and encompasses all modifications or alterations derived from meanings, the scope, and equivalents of the appended claims.

### [Reference Numerals]

1000 ABUTMENT ASSEMBLY
100 IMPLANT
200 ABUTMENT
300 LOWER CONNECTION PART
400 CROWN
500A, 500B UPPER CONNECTION PART
600 SCREW

## Claims

1. An abutment assembly (1000) comprising:
a lower connection part (300) having a central portion in which a first through hole extending in a vertical direction is formed, an upper portion in which a first rotation prevention portion coupled to a crown (400) to prevent relative rotation is formed, and a lower portion in which a second rotation prevention portion coupled to an abutment (200) to prevent relative rotation is formed; and
an upper connection part (500A, 500B) having a central portion in which a third through hole extending in the vertical direction is formed and inserted into a through hole of the crown (400) to be coupled to the lower connection part (300).

2. The abutment assembly (1000) of claim 1, further comprising the crown (400) in which a second through hole extending in the vertical direction is formed in a central portion of the crown (400) and a lower groove into which the first rotation prevention portion of the lower connection part (300) is inserted and coupled thereto is formed under the second through hole.

3. The abutment assembly (1000) of claim 2, wherein:
the lower groove of the crown (400) includes a circular coupling surface to which the first rotation prevention portion is coupled;
one or more flat surface portions formed perpendicular to a radial direction of the lower groove are formed on the coupling surface; and
the first rotation prevention portion includes one or more rotation prevention surfaces formed to be cut to correspond to the flat surface portions.

4. The abutment assembly (1000) of claim 2, wherein:
the lower groove of the crown (400) includes a circular coupling surface to which the first rotation prevention portion is coupled;
a recessed portion is formed in the coupling surface; and
the first rotation prevention portion includes a protruding portion corresponding to the recessed portion.

5. The abutment assembly (1000) of claim 2, wherein:
a stepped portion is provided in the second through hole of the crown (400); and
the upper connection part (500A, 500B) includes a support portion caught on and supported by the stepped portion of the crown (400) and a lower coupling portion extending from a lower portion of the support portion and coupled to the first through hole of the lower connection part (300).

6. The abutment assembly (1000) of claim 5, wherein:
the lower coupling portion includes coupling pieces divided by cut grooves and elastically deformed in a radial direction;
a catching protrusion is formed on an outer surface of each of the coupling pieces;
an inner vertical portion having a constant inner diameter and a boring portion which is provided under the inner vertical portion and to which the catching protrusion is coupled are formed in the first through hole of the lower connection part (300); and
the coupling pieces are contracted inward in the radial direction while passing through the inner vertical portion and expand in the boring portion in the radial direction to be elastically coupled to an inner circumferential surface of the first through hole.

7. The abutment assembly (1000) of claim 5, wherein:
a cross section of the lower coupling portion is formed in a circular shape; and
the lower coupling portion is press-fitted into the first through hole of the lower connection part (300) such that an outer circumferential surface of the lower coupling portion is in close contact with an inner circumferential surface of the first through hole.

8. The abutment assembly (1000) of claim 1, further comprising the abutment (200) in which a second inner circumferential screw portion is provide in a central portion of the abutment (200) and a second inner groove to which the second rotation prevention portion is coupled is formed.

9. The abutment assembly (1000) of claim 8, wherein:
a cross section of the second rotation prevention portion is formed in a polygonal shape; and
the second inner groove includes a polygonal portion corresponding to the second rotation prevention portion.

10. The abutment assembly (1000) of claim 8, further comprising a screw (600) supported by an upper surface of the upper connection part (500A, 500B) and having a lower portion in which an outer circumferential screw portion fastened to the second inner circumferential screw portion of the abutment (200) is formed.

11. The abutment assembly (1000) of claim 10, wherein a third inner circumferential screw portion to which the outer circumferential screw portion of the screw is fastened is provided in the first through hole of the lower connection part (300).

12. An abutment assembly (1000) comprising:
an implant (100) implanted in an alveolar bone and including a first inner groove in which a first inner circumferential screw portion is formed;
an abutment (200) which has a central portion in which a second inner groove including a second inner circumferential screw portion is formed and is inserted into the first inner groove and fastened to the first inner circumferential screw portion;
a crown (400) having a central portion in which a second through hole extending in a vertical direction is formed and including a lower groove under the second through hole;
a lower connection part (300) having a central portion in which a first through hole extending in the vertical direction is formed, an upper portion in which a first rotation prevention portion coupled to the lower groove of the crown (400) is formed to prevent relative rotation, and a lower portion in which a second rotation prevention portion coupled to the second inner groove of the abutment (200) is formed to prevent relative rotation; and
an upper connection part (500A, 500B) having a central portion in which a third through hole extending in the vertical direction is formed and inserted into the second through hole of the crown (400) to be coupled to the lower connection part (300).
